# EUROPÄISCHE PATENTSCHRIFT

(11) **EP 3 883 116 B1**
(45) Veröffentlichungstag und Bekanntmachung des Hinweises auf die Patenterteilung: **26.11.2025**
(21) Anmeldenummer: 21157743.2
(22) Anmeldetag: 18.02.2021
(51) Int. Cl.: H02M 7/797, B60L 9/24, B60L 9/00

(54) **FAHRZEUG, INSBESONDERE SCHIENENFAHRZEUG**
VEHICLE, IN PARTICULAR RAIL VEHICLE
VÉHICULE, EN PARTICULIER VÉHICULE FERROVIAIRE

(30) Priorität: 16.03.2020 DE 102020203318
(43) Veröffentlichungstag der Anmeldung: 22.09.2021
(73) Patentinhaber: Siemens Mobility GmbH, 80997 München (DE)
(72) Erfinder: März, Andreas, 91227 Leinburg (DE); Schönewolf, Stefan Hans Werner, 90489 Nürnberg (DE)
(74) Vertreter: Siemens Patent Attorneys

(56) Entgegenhaltungen:
- WO-A1-2018/179234
- LIN B R ET AL: "Single-phase switching-mode rectifier with capacitor-clamped topology", IEE PROCEEDINGS: ELECTRIC POWER APPLICATIONS, INSTITUTION OF ELECTRICAL ENGINEERS, GB, vol. 152, no. 1, 7 January 2005 (2005-01-07), pages 9 - 16, XP006023349, ISSN: 1350-2352, DOI: 10.1049/IP-EPA:20041161
- HARRASI ALIREZA ET AL: "A Cost-Effective Harmonic Cancellation Method for High-Frequency Silicon Carbide MOSFET-Based Single Phase Inverter", IEEE POWER AND ENERGY TECHNOLOGY SYSTEMS JOURNAL, IEEE, vol. 3, no. 4, 1 December 2016 (2016-12-01), pages 128 - 142, XP011636485, DOI: 10.1109/JPETS.2016.2577682
- BEHMANN U: "Erster Mittelfrequenz-Traktions-transformator im Betriebseinsatz", EB- ELEKTRISCHE BAHNEN, DIV-DEUTSCHER INDUSTRIEVERLAG, DE, vol. 110, no. 8-9, 1 August 2012 (2012-08-01), pages 408 - 413, XP001578984, ISSN: 0013-5437
- GLASL M ET AL: "Modulares Regelungssystem f�r den einphasig gespeisten Netzstromrichter eines Traktionsantriebs", ELEKTROTECH. INFTECH. 114, 1 January 1997 (1997-01-01), pages 391 - 397, XP055827296, Retrieved from the Internet <URL:https://link.springer.com/content/pdf/10.1007/BF03159056.pdf> [retrieved on 20210723]

## Beschreibung

Die Erfindung bezieht sich auf Fahrzeuge, insbesondere Schienenfahrzeuge, die mit Umrichtern ausgestattet sind.

Bekanntermaßen können Schienenfahrzeuge Umrichter aufweisen. Solche Umrichter können zwischen einen Transformator und einen Gleichspannungszwischenkreis geschaltet sein, der beispielsweise einen Antrieb und/oder einen Hilfsbetriebeumrichter mit Energie speist.

Im Bereich der Schienenfahrzeugtechnik bekannte Umrichter sind häufig als Vierquadrantensteller ausgebildet und umfassen vier baugleiche Schalter, heutzutage meist in Form von IGBTs.

Der Erfindung liegt die Aufgabe zugrunde, ein Fahrzeug mit einem gegenüber dem Stand der Technik verbesserten Umrichter anzugeben.

Diese Aufgabe wird erfindungsgemäß durch ein Fahrzeug mit den Merkmalen gemäß Patentanspruch 1 gelöst. Vorteilhafte Ausgestaltungen des erfindungsgemäßen Fahrzeugs sind in Unteransprüchen angegeben.

Danach ist erfindungsgemäß vorgesehen, dass sich der erste und zweite Schalter jeweils von dem dritten und vierten Schalter unterscheidet und zwar dahingehend, dass die Schaltverluste des ersten und zweiten Schalters, insbesondere bauartbedingt bzw. aufgrund ihrer Bauart oder ihres Schaltprinzips, jeweils kleiner sind als die Schaltverluste des dritten und vierten Schalters, und die Steuereinrichtung derart ausgestaltet ist, dass sie den ersten und zweiten Schalter stets jeweils mit einer höheren Umschaltfrequenz umschaltet als den dritten und vierten Schalter.

Ein wesentlicher Vorteil des erfindungsgemäßen Fahrzeugs besteht darin, dass durch den hybriden Aufbau des Umrichters bzw. der Ausstattung mit zumindest zwei unterschiedlichen Arten von Schaltern sowie durch die erfindungsgemäß unterschiedliche Ansteuerung der zumindest zwei Schalterarten die Verlustleistung - wegen des Einsatzes zumindest zweier relativ schaltverlustarmer Schalter - und/oder der Stromoberwellengehalt - wegen der höheren Umschaltfrequenz bei den schaltverlustarmen Schaltern - reduziert werden kann. Dennoch lässt sich der Umrichter kostengünstig fertigen, da nicht alle vier Schalter schaltverlustarm ausgeführt werden müssen, sondern nur der erste und zweite; der dritte und vierte Schalter können - wie im Stand der Technik - beispielsweise als kostengünstiger IGBT ausgeführt werden.

Ein weiterer wesentlicher Vorteil des erfindungsgemäßen Fahrzeugs besteht - im Falle eines Einsatzes beispielsweise in der Schienenfahrzeugtechnik - darin, dass der Umrichter den Anschluss an einen Transformator ermöglicht, der eine relativ kleine, insbesondere eine kleinere Streuinduktivität als bisher in der Schienenfahrzeugtechnik vor Umrichter geschaltete Transformatoren, aufweist. Eine Reduktion der Streuinduktivität wird durch die höhere Umschaltfrequenz bei den schaltverlustarmen Schaltern ermöglicht; ein Transformator mit reduzierter Streuinduktivität lässt sich üblicherweise mit reduzierten elektrischen Verlusten ausführen.

Der Umrichter bildet gemäß der Erfindung einen Vierquadrantensteller.

Die Steuereinrichtung ist vorzugsweise derart ausgestaltet, dass sie mit einer ersten Umschaltfrequenz den ersten und zweiten Schalter in komplementäre Schaltzustände versetzt und mit einer zweiten Umschaltfrequenz den dritten und vierten Schalter in komplementäre Schaltzustände versetzt, wobei die erste Umschaltfrequenz erfindungsgemäß höher als die zweite Umschaltfrequenz ist.

Der erste und zweite Anschluss auf der ersten Anschlussseite bilden Wechselspannungsanschlüsse des Umrichters; der erste und zweite Anschluss auf der zweiten Anschlussseite bilden Gleichspannungsanschlüsse des Umrichters.

Die Steuereinrichtung ist vorzugsweise derart ausgestaltet, dass sie den dritten und vierten Schalter in komplementäre Schaltzustände versetzt, und zwar mit einer Umschaltfrequenz, die der Wechselspannungsfrequenz zwischen dem ersten und zweiten Anschluss der ersten Anschlussseite oder einem ganzzahligen Vielfachen davon entspricht.

Alternativ oder zusätzlich ist es vorteilhaft, wenn die Steuereinrichtung derart ausgestaltet ist, dass sie den ersten und zweiten Schalter in komplementäre Schaltzustände versetzt, und zwar mit einer Umschaltfrequenz, die einem beliebigen - ganzzahligen oder unganzzahligen - Vielfachen der Wechselspannungsfrequenz zwischen dem ersten und zweiten Anschluss der ersten Anschlussseite entspricht.

Die Umschaltfrequenz, mit der der erste und zweite Schalter umgeschaltet werden, beträgt vorzugsweise zwischen dem 6- und 360-fachen der Umschaltfrequenz, mit der der dritte und vierte Schalter komplementär zueinander umgeschaltet werden.

Die Steuereinrichtung ist vorzugsweise derart ausgestaltet, dass sie durch eine Pulsweitenansteuerung des ersten und zweiten Schalters einen Leistungsfluss zwischen der ersten und zweiten Anschlussseite einstellt.

Auch wird es als vorteilhaft angesehen, wenn die Steuereinrichtung derart ausgestaltet ist, dass sie durch eine Pulsweitenansteuerung des ersten und zweiten Schalters und Schalten des dritten und vierten Schalters in komplementäre Schaltzustände, und zwar mit einer Umschaltfrequenz, die der Wechselspannungsfrequenz zwischen dem ersten und zweiten Anschluss der ersten Anschlussseite oder einem ganzzahligen Vielfachen davon entspricht, einen Leistungsfluss zwischen der ersten und zweiten Anschlussseite einstellt.

Alternativ oder zusätzlich kann in vorteilhafter Weise vorgesehen sein, dass die Steuereinrichtung derart ausgestaltet ist, dass sie durch eine Pulsweitenansteuerung des ersten und zweiten Schalters und Schalten des dritten und vierten Schalters in komplementäre Schaltzustände, und zwar mit einer Umschaltfrequenz, die der Wechselspannungsfrequenz zwischen dem ersten und zweiten Anschluss der ersten Anschlussseite oder einem ganzzahligen Vielfachen davon entspricht, einen Phasenwinkel zwischen Strom und Spannung der Wechselspannung auf der ersten Anschlussseite zwischen dem ersten und zweiten Anschluss einstellt.

Alternativ oder zusätzlich kann in vorteilhafter Weise vorgesehen sein, dass die Steuereinrichtung derart ausgestaltet ist, dass sie durch eine Pulsweitenansteuerung des ersten und zweiten Schalters und Schalten des dritten und vierten Schalters in komplementäre Schaltzustände, und zwar mit einer Umschaltfrequenz, die der Wechselspannungsfrequenz zwischen dem ersten und zweiten Anschluss der ersten Anschlussseite oder einem ganzzahligen Vielfachen davon entspricht, ein vorgegebenes Soll-Spektrum von Stromoberwellen einstellt.

Der dritte und vierte Schalter gehören bevorzugt zu einer Schaltergruppe, die als Schalter IGBTs, GTOs oder Thyristoren, jeweils mit oder ohne antiparallel geschalteter Freilaufdiode, umfasst.

Der erste und zweite Schalter sind vorzugsweise jeweils MOSFETs, insbesondere SiC-MOSFETs, oder umfassen vorzugsweise MOSFETs, insbesondere SiC-MOSFETs.

Vorteilhaft ist es insbesondere, wenn der erste und zweite Schalter jeweils MOSFETs, insbesondere SiC-MOSFETs, sind oder MOSFETs, insbesondere SiC-MOSFETs, umfassen, zu denen jeweils eine Freilaufdiode antiparallel geschaltet ist.

Die Steuereinrichtung steuert die vier Schalter bevorzugt derart an, dass bei Anliegen einer Wechselspannung zwischen dem ersten und zweiten Anschluss der ersten Anschlussseite zwischen dem ersten und zweiten Anschluss der zweiten Anschlussseite eine Gleichspannung anliegt und/oder bei Anliegen einer Gleichspannung zwischen dem ersten und zweiten Anschluss der zweiten Anschlussseite zwischen dem ersten und zweiten Anschluss der ersten Anschlussseite eine Wechselspannung anliegt.

Gemäß einer besonders bevorzugten Ausgestaltung ist vorgesehen, dass eine erste Chipfläche, die gebildet wird durch die Summe aus der Chipfläche des ersten Schalters und der Chipfläche - so vorhanden - einer oder mehrerer antiparallel zum ersten Schalter geschalteter Freilaufdioden, so groß oder zumindest näherungsweise so groß ist wie eine zweite Chipfläche, die gebildet wird durch die Summe aus der Chipfläche des zweiten Schalters und der Chipfläche - so vorhanden - einer oder mehrerer antiparallel zum zweiten Schalter geschalteter Freilaufdioden.

Alternativ oder zusätzlich kann vorgesehen sein, dass eine dritte Chipfläche, die gebildet wird durch die Summe aus der Chipfläche des dritten Schalters und der Chipfläche - so vorhanden - einer oder mehrerer antiparallel zum dritten Schalter geschalteter Freilaufdioden, so groß oder zumindest näherungsweise so groß ist wie eine vierte Chipfläche, die gebildet wird durch die Summe aus der Chipfläche des vierten Schalters und der Chipfläche - so vorhanden - einer oder mehrerer antiparallel zum vierten Schalter geschalteter Freilaufdioden.

Das Verhältnis zwischen der ersten und dritten, der zweiten und dritten, der ersten und vierten und/oder der zweiten und vierten Chipfläche liegt vorzugsweise in einem Bereich zwischen 0,4 und 2,5.

Der Umrichter ist bei bevorzugten Ausgestaltungen des Fahrzeugs zwischen einen Transformator des Fahrzeugs und einen Gleichspannungszwischenkreis geschaltet, der mit einem Antrieb des Fahrzeugs und/oder einem Hilfsbetriebeumrichter in Verbindung steht und diesen oder diese mit Energie speisen kann.

Die vier Schalter gehören bevorzugt jeweils zu derselben Spannungsklasse, die in einem Bereich von 1700 V bis 6500 V liegt. Besonders bevorzugt handelt es sich um eine der folgenden Spannungsklassen: 1700 V, 3300 V, 4500 V oder 6500 V.

Die Erfindung bezieht sich außerdem auf ein Verfahren zum Betreiben eines Fahrzeugs, insbesondere Schienenfahrzeugs, mit einem Umrichter mit einer einen ersten und einen zweiten Anschluss aufweisenden ersten Anschlussseite und einer einen ersten und einen zweiten Anschluss aufweisenden zweiten Anschlussseite, wobei der Umrichter einen ersten, zweiten, dritten und vierten Schalter und eine Steuereinrichtung zum Ansteuern der vier Schalter umfasst, der erste und zweite Schalter eine erste Reihenschaltung mit zwei äußeren Anschlüssen bilden, von denen einer mit dem ersten Anschluss der zweiten Anschlussseite und der andere mit dem zweiten Anschluss der zweiten Anschlussseite in Verbindung steht, wobei ein Mittenanschluss der ersten Reihenschaltung mit dem ersten Anschluss der ersten Anschlussseite in Verbindung steht, der dritte und vierte Schalter eine zweite Reihenschaltung mit zwei äußeren Anschlüssen bilden, von denen einer mit dem ersten Anschluss der zweiten Anschlussseite und der andere mit dem zweiten Anschluss der zweiten Anschlussseite in Verbindung steht, wobei ein Mittenanschluss der zweiten Reihenschaltung mit dem zweiten Anschluss der ersten Anschlussseite in Verbindung steht.

Erfindungsgemäß ist vorgesehen, dass sich der erste und zweite Schalter jeweils von dem dritten und vierten Schalter unterscheiden und zwar dahingehend, dass die Schaltverluste des ersten und zweiten Schalters jeweils kleiner sind als die Schaltverluste des dritten und vierten Schalters, und dass der erste und zweite Schalter stets jeweils mit einer höheren Umschaltfrequenz umgeschaltet werden als der dritte und vierte Schalter.

Bezüglich der Vorteile des erfindungsgemäßen Verfahrens und bezüglich vorteilhafter Ausgestaltungen des erfindungsgemäßen Verfahrens sei auf die obigen Ausführungen im Zusammenhang mit dem erfindungsgemäßen Fahrzeug verwiesen.

Die Erfindung wird nachfolgend anhand von Ausführungsbeispielen näher erläutert; dabei zeigen beispielhaft:
- Figur 1: in einer schematischen Ansicht Bestandteile eines Ausführungsbeispiels für ein erfindungsgemäßes Schienenfahrzeug, das mit einem Umrichter ausgestattet ist,
- Figur 2: ein erstes Ausführungsbeispiel für einen Umrichter für das Schienenfahrzeug gemäß Figur 1,
- Fig. 3-5: beispielhaft einen vorteilhaften Betrieb des Umrichters gemäß Figur 2,
- Figur 6: ein zweites Ausführungsbeispiel für einen Umrichter für das Schienenfahrzeug gemäß Figur 1, und
- Fig.7-8: andere Verschaltungen von Umrichtern, beispielsweise der Umrichter gemäß den Figuren 2 und 6, in einem erfindungsgemäßen Schienenfahrzeug.

In den Figuren werden der Übersicht halber für identische oder vergleichbare Komponenten stets dieselben Bezugszeichen verwendet.

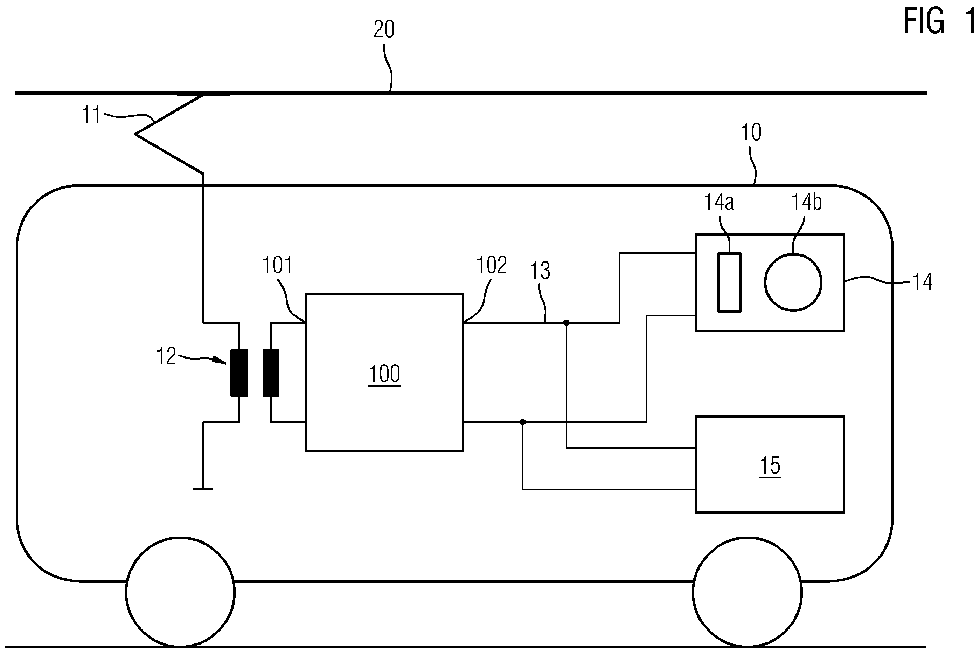

Die Figur 1 zeigt ein Ausführungsbeispiel für ein erfindungsgemäßes Schienenfahrzeug 10, das über einen Stromabnehmer (z. B. Pantographen) 11 an ein streckenseitiges Energieversorgungsnetz 20 und über Räder und Schienen an Erdpotential angeschlossen ist. Der Stromabnehmer 11 steht über einen Transformator 12 mit einer ersten Anschlussseite 101 eines Umrichters 100 in Verbindung. Eine zweite Anschlussseite 102 des Umrichters 100 ist an einen Gleichspannungszwischenkreis 13 des Schienenfahrzeugs 10 angeschlossen.

Der Gleichspannungszwischenkreis 13 steht bei dem Ausführungsbeispiel gemäß Figur 1 mit einem Antrieb 14, der beispielsweise einen Stromrichter 14a und einen Antriebsmotor 14b umfasst, und mit einem Hilfsbetriebeumrichter 15, an dem aus Gründen der Übersicht in der Figur 1 nicht weiter gezeigte weitere Komponenten angeschlossen sind oder sein können, in Verbindung. Alternativ oder zusätzlich können an den Gleichspannungszwischenkreis 13 bzw. die zweite Anschlussseite 102 des Umrichters 100 auch andere Komponenten angeschlossen werden, beispielsweise Batterieladegeräte oder dergleichen.

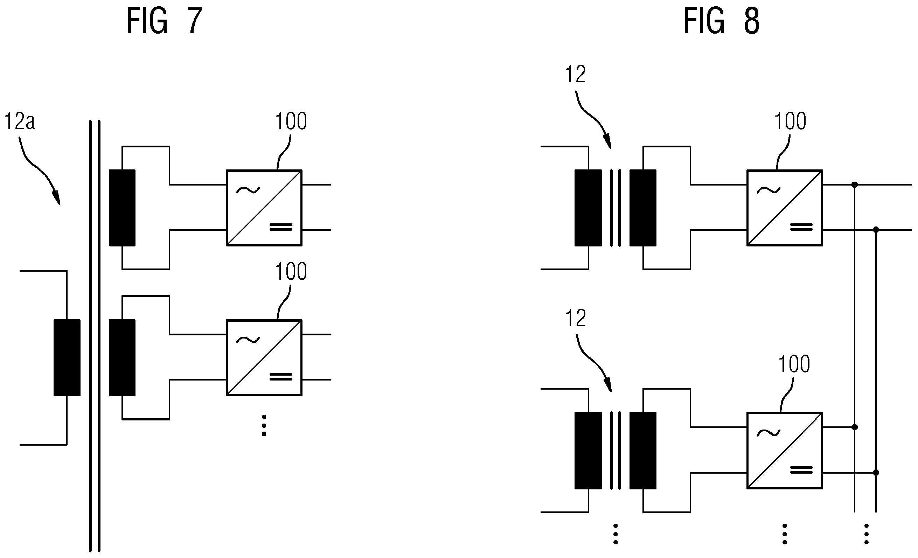

Die in Figur 1 gezeigte elektrische Beschaltung des Umrichters 100 im Schienenfahrzeug 10 ist nur beispielhaft zu verstehen; mit anderen Worten kann der Umrichter 100 auch mit völlig anderen Komponenten verbunden oder in anderer elektrischer Konstellation im Schienenfahrzeug 10 eingesetzt werden. Alternative Beschaltungen des Umrichters 100 im Schienenfahrzeug 10 werden weiter unten beispielhaft im Zusammenhang mit den Figuren 7 und 8 erläutert.

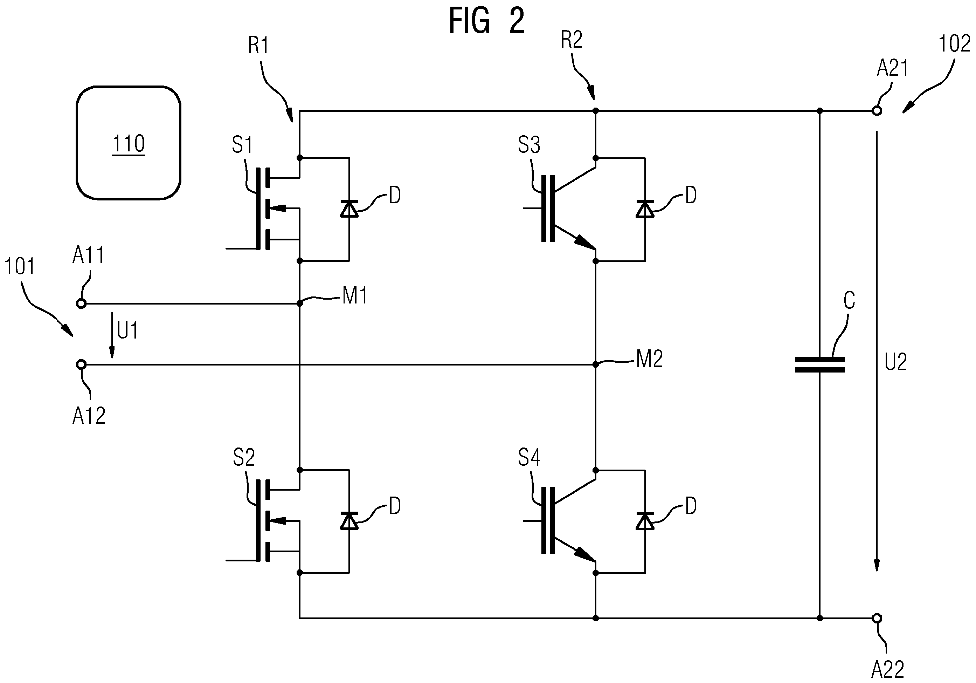

Die Figur 2 zeigt ein Ausführungsbeispiel für den Umrichter 100 des Schienenfahrzeugs 10 gemäß Figur 1 näher im Detail. Der Umrichter 100 bildet einen sogenannten Vierquadrantensteller und weist einen ersten Schalter S1, einen zweiten Schalter S2, einen dritten Schalter S3 und einen vierten Schalten S4 auf, die von einer Steuereinrichtung 110 des Umrichters 100 angesteuert werden.

Der erste Schalter S1 und der zweite Schalter S2 bilden eine erste Reihenschaltung R1 mit zwei äußeren Anschlüssen, von denen einer mit einem ersten Anschluss A21 und der andere mit einem zweiten Anschluss A22 auf der zweiten Anschlussseite 102 des Umrichters 100 in Verbindung steht. Ein Mittenanschluss M1 der ersten Reihenschaltung R1 ist mit einem ersten Anschluss A11 auf der ersten Anschlussseite 101 des Umrichters 100 verbunden.

Der dritte Schalter S3 und der vierte Schalter S4 bilden eine zweite Reihenschaltung R2, bei der einer der zwei äußeren Anschlüsse mit dem ersten Anschluss A21 auf der zweiten Anschlussseite 102 und der andere mit dem zweiten Anschluss A22 auf der zweiten Anschlussseite 102 in Verbindung steht. Ein Mittenanschluss M2 der zweiten Reihenschaltung R2 bildet einen zweiten Anschluss A12 auf der ersten Anschlussseite 101 des Umrichters 100.

Bei dem Ausführungsbeispiel gemäß Figur 2 ist zwischen die zwei Anschlüsse A21 und A22 auf der zweiten Anschlussseite 102 des Umrichters 100 ein Kondensator C geschaltet, der eine auf der Ausgangsseite 102 anliegende Gleichspannung U2 glättet.

Bei dem Ausführungsbeispiel gemäß Figur 2 handelt es sich bei dem ersten Schalter S1 und dem zweiten Schalter S2 jeweils um einen SiC-MOSFET-Transistor, zu dem jeweils eine Freilaufdiode D antiparallel geschaltet ist. Die Freilaufdiode D kann eine interne Diode des jeweiligen Schalters S1 oder S2 sein oder alternativ eine externe, also extern antiparallel geschaltete Freilaufdiode.

Bei dem dritten und vierten Schalter S3, S4 handelt es sich vorzugsweise um Schalter aus einer Schaltergruppe, zu denen IGBTs, GTOs und Thyristoren gehören. Mit Blick auf geringe Kosten ist es von Vorteil, wenn es sich bei den Schaltern S3 und S4 um IGBTs handelt, da IGBTs beispielsweise kostengünstiger als SiC-MOSFET-Transistoren sind.

Bei dem Ausführungsbeispiel gemäß Figur 2 ist zu dem dritten Schalter S3 und dem vierten Schalter S4 jeweils eine Freilaufdiode D antiparallel geschaltet; die Freilaufdiode D kann eine interne Diode des jeweiligen Schalters S3 oder S4 oder alternativ eine externe, also extern antiparallel geschaltete Freilaufdiode sein.

Vorteilhaft ist es, wenn eine erste Chipfläche, die durch die Summe aus der Chipfläche des ersten Schalters S1 und der Chipfläche der antiparallel zum ersten Schalter S1 geschalteten Freilaufdiode D gebildet wird, so groß oder zumindest näherungsweise so groß ist wie eine zweite Chipfläche, die durch die Summe aus der Chipfläche des zweiten Schalters S2 und der Chipfläche der dazu antiparallel geschalteten Freilaufdiode D gebildet wird.

Eine dritte Chipfläche, die durch die Summe aus der Chipfläche des dritten Schalters S3 und der Chipfläche der antiparallel zum dritten Schalter S3 geschalteten Freilaufdiode D gebildet wird, ist vorzugsweise so groß oder zumindest näherungsweise so groß ist wie eine vierte Chipfläche, die durch die Summe aus der Chipfläche des vierten Schalters S4 und der Chipfläche der dazu antiparallel geschalteten Freilaufdiode D gebildet wird.

Vorteilhaft ist es, wenn das Verhältnis zwischen der ersten und dritten Chipfläche, das Verhältnis zwischen der ersten und vierten Chipfläche, das Verhältnis zwischen der zweiten und dritten Chipfläche und das Verhältnis zwischen der zweiten und vierten Chipfläche jeweils in einem Bereich zwischen 0,4 und 2,5 liegt.

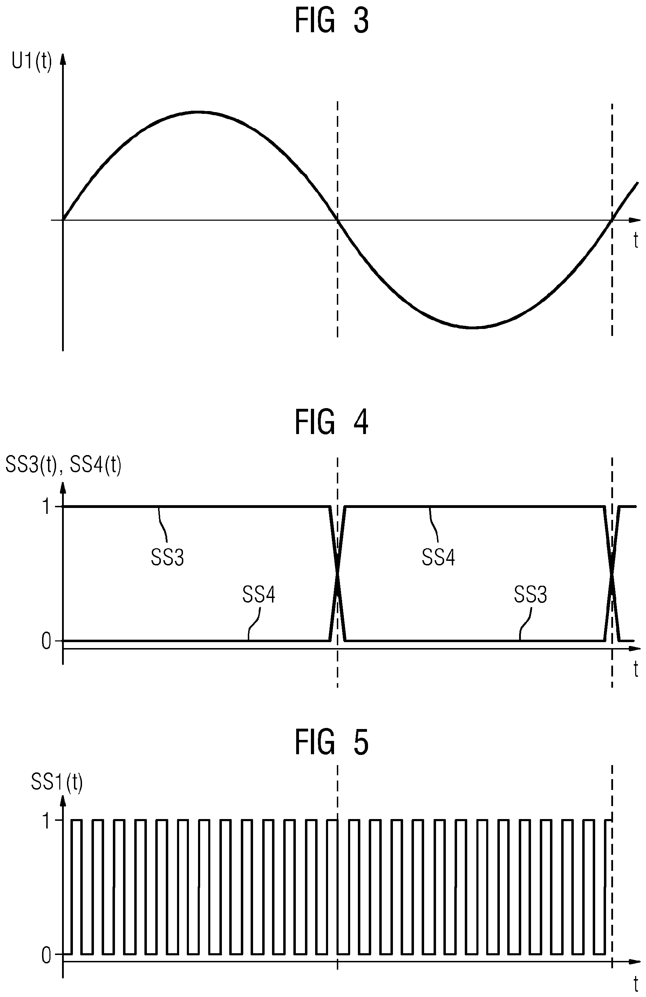

Im Zusammenhang mit den Figuren 3 bis 5 wird nachfolgend eine bevorzugte Arbeitsweise der Steuereinrichtung 110 bzw. eine bevorzugte Ansteuerung der vier Schalter S1 bis S4 erläutert.

Unter der Annahme bzw. der Voraussetzung, dass die Spannung U1 zwischen den Anschlüssen A11 und A12 auf der ersten Anschlussseite 101 des Umrichters 100 - von Oberwellen und Störungen abgesehen - sinusförmig ist und einen Spannungsverlauf U1(t) über der Zeit t aufweist, wie er in der Figur 3 beispielhaft gezeigt ist, wird die Steuereinrichtung 110 den dritten Schalter S3 und den vierten Schalter S4 vorzugsweise komplementär zueinander umschalten, und zwar mit einer Umschaltfrequenz, die der Wechselspannungsfrequenz auf der ersten Anschlussseite 101 oder einem ganzzahligen Vielfachen davon entspricht.

In der Figur 4 ist mit dem Bezugszeichen SS3 das Ansteuersignal für den dritten Schalter S3 und mit dem Bezugszeichen SS4 das Ansteuersignal für den vierten Schalter S4 gekennzeichnet. Weisen die Steuersignale SS3 bzw. SS4 eine logische 1 auf, so wird der jeweils zugeordneter Schalter S3 bzw. S4 beispielsweise eingeschaltet, anderenfalls beispielsweise ausgeschaltet. Weist der Spannungsverlauf U1 eine Grundfrequenz von 50 Hz auf, so erfolgt das Umschalten des dritten und vierten Schalters also vorzugsweise mit 50 Hz, wie in der Figur 4 gezeigt oder einem anderen ganzzahligen Vielfachen von 50 Hz.

Die Figur 5 zeigt beispielhaft die Ansteuerung des ersten Schalters S1 durch die Steuereinrichtung 110 gemäß Figur 2. Auch hier gilt beispielsweise, dass der Schalter S1 eingeschaltet wird, wenn das zugehörige Ansteuersignal eine logische Eins aufweist und anderenfalls ausgeschaltet wird.

Es lässt sich erkennen, dass das Ein- und Ausschalten des ersten Schalters S1 mit einer sehr viel höheren Umschaltfrequenz erfolgt als das Umschalten des dritten und vierten Schalters S3, S4. Besonders vorteilhaft ist es, wenn die Umschaltfrequenz des ersten Schalters S1 zwischen dem 6-fachen und dem 360-fachen der Umschaltfrequenz des dritten und vierten Schalters S3, S4 beträgt.

Die Ansteuerung des zweiten Schalters S2 erfolgt vorzugsweise komplementär zur Ansteuerung des ersten Schalters S1.

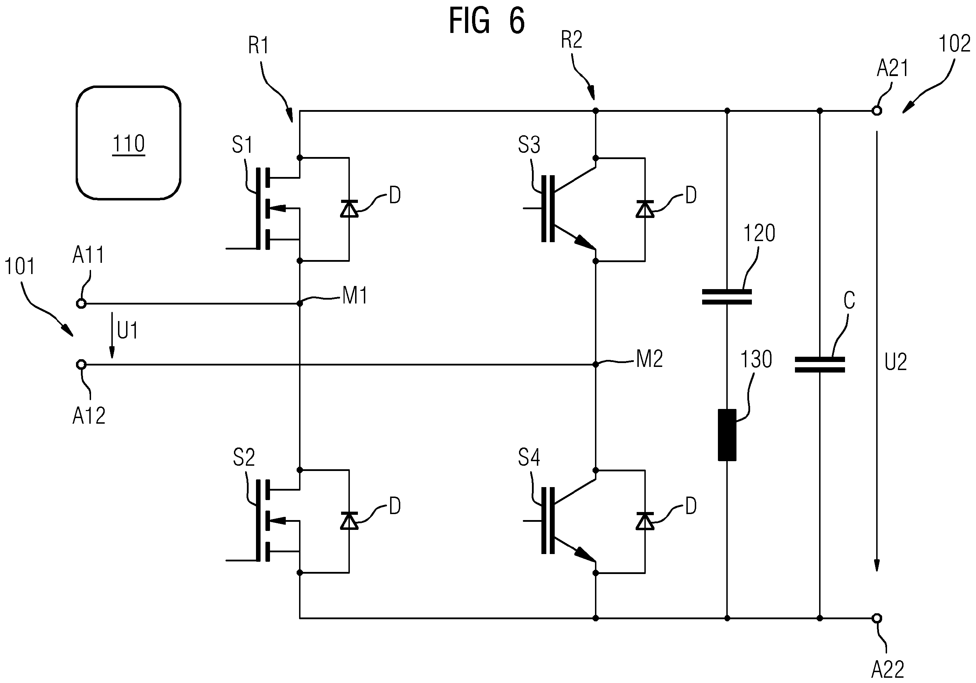

Die Figur 6 zeigt ein zweites Ausführungsbeispiel für einen Umrichter 100, der bei dem Schienenfahrzeug 10 gemäß Figur 1 eingesetzt werden kann. Im Unterschied zu dem Ausführungsbeispiel gemäß Figur 2 weist der Umrichter 100 gemäß Figur 6 einen zusätzlichen Saugkreis auf, der durch einen zusätzlichen Kondensator 120 und eine zusätzliche Induktivität 130 gebildet wird. Die Funktion des Saugkreises besteht darin, die grundfrequente Welligkeit auf der zweiten Anschlussseite 102 des Umrichters 100 zu reduzieren. Ansonsten gelten die obigen Ausführungen im Zusammenhang mit den Figuren 2 bis 5 bei dem Ausführungsbeispiel gemäß Figur 6 entsprechend.

Wie bereits erwähnt, ist die elektrische Verschaltung des Umrichters 100 bei dem Schienenfahrzeug 10 gemäß Figur 1 nur beispielhaft zu verstehen. Alternativ oder zusätzlich können weitere Umrichter 100 oder anders verschaltete Umrichter 100 im Schienenfahrzeug 10 vorhanden sein.

So zeigt die Figur 7 ein Ausführungsbeispiel für eine andere Verschaltung von Umrichtern 100 in einem Schienenfahrzeug, bei der zwei Umrichter 100 an verschiedene Sekundärseiten ein und desselben Transformators 12a angeschlossen sind und dabei mit derselben Primärseite des Transformators 12a gekoppelt sind.

Die Figur 8 zeigt ein Ausführungsbeispiel für parallel geschaltete Umrichter 100, die bzgl. ihrer Wechselspannungsseite bzw. ihrer ersten Anschlussseite 101 jeweils mit individuellen Transformatoren 12 in Verbindung stehen und bezüglich ihrer zweiten Anschlussseite 102 parallel geschaltet sind.

Darüber hinaus sind selbstverständlich auch noch andere Varianten möglich, wie Umrichter 100 innerhalb eines erfindungsgemäßen Fahrzeugs, insbesondere eines erfindungsgemäßen Schienenfahrzeugs 10 angeordnet sein können. Die obigen Ausführungen im Zusammenhang mit einem vorteilhaften Betrieb des Umrichters 100, wie er im Zusammenhang mit den Figuren 3 bis 5 erläutert worden ist, gelten in diesem Zusammenhang vorzugsweise entsprechend.

Zusammengefasst können durch den hybriden Aufbau des Umrichters 100, wie oben beschrieben, die Vorteile eines klassischen Vierquadrantenstellers mit vier IGBTs mit den Vorteilen von MOSFETs kombiniert werden. Durch eine Ausführung der den ersten und zweiten Schalter aufweisenden ersten Halbbrücke (=erste Reihenschaltung R1) mit SiC-MOSFETs kann der Umrichter 100 - wegen seiner verhältnismäßig kleinen Schaltverluste - mit sehr hoher Schaltfrequenz betrieben werden, und zwar einer wesentlich höheren, als dies mit IGBTs in der ersten Halbbrücke möglich wäre. Auf diese Weise kann der Stromoberwellengehalt bei ansonsten gleichem Aufbau des Systems in einfacher Weise abgesenkt werden. Dies erleichtert beispielsweise das Erfüllen normativer Anforderungen im Eisenbahnbereich, die das Einspeisen von Stromoberwellen (Störströme) in das Netz oder das Gleis begrenzen.

Auch kann der Umrichter 100 - wegen der erhöhten Taktfrequenz in der ersten Halbbrücke - mit Transformatoren kombiniert werden, die eine vergleichsweise kleine Streuinduktivität aufweisen. Durch die beschriebene erhöhte Taktfrequenz in der ersten Halbbrücke (=erste Reihenschaltung R1) ergibt sich nämlich trotz reduzierter Streuinduktivität des Transformators lediglich ein Stromoberwellengehalt, wie er bei Anordnungen mit einem Transformator mit hoher Streuinduktivität und einem langsam getakteten IGBT-Vierquadrantensteller auftritt, sodass die normativen Anforderungen im Eisenbahnbereich bzgl. Stromoberwellen auch mit Transformatoren mit niedriger Streuinduktivität erfüllt werden können.

Ein Transformator mit geringerer Streuinduktivität weist wiederum den Vorteil auf, dass seine Verlustleistung in der Regel kleiner als die konventioneller Transformatoren mit hoher Streuinduktivität ist. Damit lässt sich das gesamte Schienenfahrzeug 10 energieeffizienter als herkömmliche Schienenfahrzeuge ausgestalten. Auch ist es möglich, "streuarme" Transformatoren mit Feststoffisolierung auszuführen.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 10: Schienenfahrzeug
- 11: Stromabnehmer/Pantograph
- 12: Transformator
- 12a: Transformator
- 13: Gleichspannungszwischenkreis
- 14: Antrieb
- 14a: Stromrichter
- 14b: Antriebsmotor
- 15: Hilfsbetriebeumrichter
- 20: Energieversorgungsnetz
- 100: Umrichter
- 101: erste Anschlussseite
- 102: zweite Anschlussseite
- 110: Steuereinrichtung
- 120: Kondensator
- 130: Induktivität

- A11: Anschluss
- A12: Anschluss
- A21: Anschluss
- A22: Anschluss
- C: Kondensator
- D: Freilaufdiode
- M1: Mittenanschluss
- M2: Mittenanschluss
- R1: Reihenschaltung
- R2: Reihenschaltung
- S1: Schalter
- S2: Schalter
- S3: Schalter
- S4: Schalter
- SS1: Ansteuersignal
- SS3: Ansteuersignal
- SS4: Ansteuersignal
- t: Zeit
- U1: Spannung
- U1(t): Spannungsverlauf über der Zeit
- U2: Gleichspannung

## Patentansprüche

1. Fahrzeug, insbesondere Schienenfahrzeug (10), mit einem Umrichter (100) mit einer einen ersten und einen zweiten Anschluss (A11, A12) aufweisenden ersten Anschlussseite (101) und einer einen ersten und einen zweiten Anschluss (A21, A22) aufweisenden zweiten Anschlussseite (102), wobei
- der Umrichter (100) einen ersten, zweiten, dritten und vierten Schalter (S1-S4) und eine Steuereinrichtung (110) zum Ansteuern der vier Schalter (S1-S4) umfasst,
- der erste und zweite Schalter (S1-S2) eine erste Reihenschaltung (R1) mit zwei äußeren Anschlüssen bilden, von denen einer mit dem ersten Anschluss (A21) der zweiten Anschlussseite (102) und der andere mit dem zweiten Anschluss (A22) der zweiten Anschlussseite (102) in Verbindung steht, wobei ein Mittenanschluss (M1) der ersten Reihenschaltung (R1) mit dem ersten Anschluss (A11) der ersten Anschlussseite (101) in Verbindung steht,
- der dritte und vierte Schalter (S3-S4) eine zweite Reihenschaltung (R2) mit zwei äußeren Anschlüssen bilden, von denen einer mit dem ersten Anschluss (A21) der zweiten Anschlussseite (102) und der andere mit dem zweiten Anschluss (A22) der zweiten Anschlussseite (102) in Verbindung steht, wobei ein Mittenanschluss (M2) der zweiten Reihenschaltung (R2) mit dem zweiten Anschluss (A12) der ersten Anschlussseite (101) in Verbindung steht,
- wobei der Umrichter (100) ein Vierquadrantensteller ist,
**dadurch gekennzeichnet, dass**
- sich der erste und zweite Schalter (S1-S2) jeweils von dem dritten und vierten Schalter (S3-S4) unterscheidet und zwar dahingehend, dass die Schaltverluste des ersten und zweiten Schalters (S1-S2) jeweils kleiner sind als die Schaltverluste des dritten und vierten Schalters (S3-S4),
- die Steuereinrichtung (110) derart ausgestaltet ist, dass sie den ersten und zweiten Schalter (S1-S2) stets jeweils mit einer höheren Umschaltfrequenz umschaltet als den dritten und vierten Schalter (S3-S4), und
- der erste und zweite Anschluss (A11, A12) der ersten Anschlussseite (101) Wechselspannungsanschlüsse des Umrichters (100) bilden und der erste und zweite Anschluss (A21, A22) der zweiten Anschlussseite (102) Gleichspannungsanschlüsse des Umrichters (100) bilden.

2. Fahrzeug nach Anspruch 1,
**dadurch gekennzeichnet, dass**
- die Steuereinrichtung (110) derart ausgestaltet ist, dass sie mit einer ersten Umschaltfrequenz den ersten und zweiten Schalter (S1-S2) in komplementäre Schaltzustände versetzt und mit einer zweiten Umschaltfrequenz den dritten und vierten Schalter (S3-S4) in komplementäre Schaltzustände versetzt,
- wobei die erste Umschaltfrequenz höher als die zweite Umschaltfrequenz ist.

3. Fahrzeug nach einem der voranstehenden Ansprüche,
**dadurch gekennzeichnet, dass**
die Steuereinrichtung (110) derart ausgestaltet ist, dass sie den dritten und vierten Schalter (S3-S4) in komplementäre Schaltzustände versetzt, und zwar mit einer Umschaltfrequenz, die der Wechselspannungsfrequenz zwischen dem ersten und zweiten Anschluss (A11, A12) der ersten Anschlussseite (101) oder einem ganzzahligen Vielfachen davon entspricht.

4. Fahrzeug nach einem der voranstehenden Ansprüche,
**dadurch gekennzeichnet, dass**
- die Steuereinrichtung (110) derart ausgestaltet ist, dass sie den ersten und zweiten Schalter (S1-S2) in komplementäre Schaltzustände versetzt, und zwar mit einer Umschaltfrequenz, die einem beliebigen - ganzzahligen oder unganzzahligen - Vielfachen der Wechselspannungsfrequenz zwischen dem ersten und zweiten Anschluss (A11, A12) der ersten Anschlussseite (101) entspricht,
- wobei die Umschaltfrequenz, mit der der erste und zweite Schalter (S1-S2) umgeschaltet werden, zwischen dem 6- und 360-fachen der Umschaltfrequenz beträgt, mit der der dritte und vierte Schalter (S3-S4) komplementär zueinander umgeschaltet werden.

5. Fahrzeug nach einem der voranstehenden Ansprüche,
**dadurch gekennzeichnet, dass**
die Steuereinrichtung (110) derart ausgestaltet ist, dass sie durch eine Pulsweitenansteuerung des ersten und zweiten Schalters (S1-S2) einen Leistungsfluss zwischen der ersten und zweiten Anschlussseite (101, 102) einstellt.

6. Fahrzeug nach einem der voranstehenden Ansprüche,
**dadurch gekennzeichnet, dass**
die Steuereinrichtung (110) derart ausgestaltet ist, dass sie durch eine Pulsweitenansteuerung des ersten und zweiten Schalters (S1-S2) und Schalten des dritten und vierten Schalters (S3-S4) in komplementäre Schaltzustände, und zwar mit einer Umschaltfrequenz, die der Wechselspannungsfrequenz zwischen dem ersten und zweiten Anschluss (A11, A12) der ersten Anschlussseite (101) oder einem ganzzahligen Vielfachen davon entspricht, einen Leistungsfluss zwischen der ersten und zweiten Anschlussseite (101, 102) einstellt.

7. Fahrzeug nach einem der voranstehenden Ansprüche,
**dadurch gekennzeichnet, dass**
die Steuereinrichtung (110) derart ausgestaltet ist, dass sie durch eine Pulsweitenansteuerung des ersten und zweiten Schalters (S1-S2) und Schalten des dritten und vierten Schalters (S3-S4) in komplementäre Schaltzustände, und zwar mit einer Umschaltfrequenz, die der Wechselspannungsfrequenz zwischen dem ersten und zweiten Anschluss (A11, A12) der ersten Anschlussseite (101) oder einem ganzzahligen Vielfachen davon entspricht, einen Phasenwinkel zwischen Strom und Spannung der Wechselspannung auf der ersten Anschlussseite (101) zwischen erstem und zweitem Anschluss (A11, A12) einstellt.

8. Fahrzeug nach einem der voranstehenden Ansprüche,
**dadurch gekennzeichnet, dass**
die Steuereinrichtung (110) derart ausgestaltet ist, dass sie durch eine Pulsweitenansteuerung des ersten und zweiten Schalters (S1-S2) und Schalten des dritten und vierten Schalters (S3-S4) in komplementäre Schaltzustände, und zwar mit einer Umschaltfrequenz, die der Wechselspannungsfrequenz zwischen dem ersten und zweiten Anschluss (A11, A12) der ersten Anschlussseite (101) oder einem ganzzahligen Vielfachen davon entspricht, ein vorgegebenes Soll-Spektrum von Stromoberwellen einstellt.

9. Fahrzeug nach einem der voranstehenden Ansprüche,
**dadurch gekennzeichnet, dass**
- der dritte und vierte Schalter (S3-S4) zu einer Schaltergruppe gehören, die als Schalter IGBTs, GTOs oder Thyristoren, jeweils mit oder ohne antiparallel geschalteter Freilaufdiode, umfasst und/oder
- der erste und zweite Schalter (S1-S2) jeweils MOSFETs, insbesondere SiC-MOSFETs, sind oder MOSFETs, insbesondere SiC-MOSFETs, umfassen.

10. Fahrzeug nach einem der voranstehenden Ansprüche,
**dadurch gekennzeichnet, dass**
der erste und zweite Schalter (S1-S2) jeweils MOSFETs, insbesondere SiC-MOSFETs, sind oder MOSFETs, insbesondere SiC-MOSFETs, umfassen, zu denen jeweils eine Freilaufdiode (D) antiparallel geschaltet ist.

11. Fahrzeug nach einem der voranstehenden Ansprüche,
**dadurch gekennzeichnet, dass**
die Steuereinrichtung (110) die vier Schalter (S1-S4) derart ansteuert, dass
- bei Anliegen einer Wechselspannung zwischen dem ersten und zweiten Anschluss (A11, A12) der ersten Anschlussseite (101) zwischen dem ersten und zweiten Anschluss (A21, A22) der zweiten Anschlussseite (102) eine Gleichspannung anliegt und/oder
- bei Anliegen einer Gleichspannung zwischen dem ersten und zweiten Anschluss (A21, A22) der zweiten Anschlussseite (102) zwischen dem ersten und zweiten Anschluss (A11, A12) der ersten Anschlussseite (101) eine Wechselspannung anliegt.

12. Fahrzeug nach einem der voranstehenden Ansprüche,
**dadurch gekennzeichnet, dass**
- eine erste Chipfläche, die gebildet wird durch die Summe aus der Chipfläche des ersten Schalters (S1) und der Chipfläche - so vorhanden - einer oder mehrerer antiparallel zum ersten Schalter (S1) geschalteter Freilaufdioden (D), so groß oder zumindest näherungsweise so groß ist wie eine zweite Chipfläche, die gebildet wird durch die Summe aus der Chipfläche des zweiten Schalters (S2) und der Chipfläche - so vorhanden - einer oder mehrerer antiparallel zum zweiten Schalter (S2) geschalteter Freilaufdioden (D),
- eine dritte Chipfläche, die gebildet wird durch die Summe aus der Chipfläche des dritten Schalters (S3) und der Chipfläche - so vorhanden - einer oder mehrerer antiparallel zum dritten Schalter (S3) geschalteter Freilaufdioden (D), so groß oder zumindest näherungsweise so groß ist wie eine vierte Chipfläche, die gebildet wird durch die Summe aus der Chipfläche des vierten Schalters (S4) und der Chipfläche - so vorhanden - einer oder mehrerer antiparallel zum vierten Schalter (S4) geschalteter Freilaufdioden (D),
- das Verhältnis zwischen der ersten und dritten Chipfläche und/oder der zweiten und vierten Chipfläche in einem Bereich von 0,4 und 2,5 liegt.

13. Fahrzeug nach einem der voranstehenden Ansprüche,
**dadurch gekennzeichnet, dass**
der Umrichter (100) zwischen einen Transformator (12) des Fahrzeugs und einen Gleichspannungszwischenkreis (13) geschaltet ist, der mit einem Antrieb (14) des Fahrzeugs und/oder einem Hilfsbetriebeumrichter (15) in Verbindung steht und diesen oder diese mit Energie speisen kann.

14. Verfahren zum Betreiben eines Fahrzeugs, insbesondere Schienenfahrzeugs (10), mit einem Umrichter (100) mit einer einen ersten und einen zweiten Anschluss (A11, A12) aufweisenden ersten Anschlussseite (101) und einer einen ersten und einen zweiten Anschluss (A21, A22) aufweisenden zweiten Anschlussseite (102), wobei
- der Umrichter (100) einen ersten, zweiten, dritten und vierten Schalter (S1-S4) und eine Steuereinrichtung (110) zum Ansteuern der vier Schalter (S1-S4) umfasst,
- der erste und zweite Schalter (S1-S2) eine erste Reihenschaltung (R1) mit zwei äußeren Anschlüssen bilden, von denen einer mit dem ersten Anschluss (A21) der zweiten Anschlussseite (102) und der andere mit dem zweiten Anschluss (A22) der zweiten Anschlussseite (102) in Verbindung steht, wobei ein Mittenanschluss (M1) der ersten Reihenschaltung (R1) mit dem ersten Anschluss (A11) der ersten Anschlussseite (101) in Verbindung steht,
- der dritte und vierte Schalter (S3-S4) eine zweite Reihenschaltung (R2) mit zwei äußeren Anschlüssen bilden, von denen einer mit dem ersten Anschluss (A21) der zweiten Anschlussseite (102) und der andere mit dem zweiten Anschluss (A22) der zweiten Anschlussseite (102) in Verbindung steht, wobei ein Mittenanschluss (M2) der zweiten Reihenschaltung (R2) mit dem zweiten Anschluss (A12) der ersten Anschlussseite (101) in Verbindung steht,
- der Umrichter (100) ein Vierquadrantensteller ist,
**dadurch gekennzeichnet, dass**
- sich der erste und zweite Schalter (S1-S2) jeweils von dem dritten und vierten Schalter (S3-S4) unterscheiden und zwar dahingehend, dass die Schaltverluste des ersten und zweiten Schalters (S1-S2) jeweils kleiner sind als die Schaltverluste des dritten und vierten Schalters (S3-S4),
- dass der erste und zweite Schalter (S1-S2) stets jeweils mit einer höheren Umschaltfrequenz umgeschaltet werden als der dritte und vierte Schalter (S3-S4), und
- der erste und zweite Anschluss (A11, A12) der ersten Anschlussseite (101) Wechselspannungsanschlüsse des Umrichters (100) bilden und der erste und zweite Anschluss (A21, A22) der zweiten Anschlussseite (102) Gleichspannungsanschlüsse des Umrichters (100) bilden.

## Claims

1. Vehicle, in particular rail vehicle (10), having a converter (100) with a first connection side (101) having a first and a second connection (A11, A12) and a second connection side (102) having a first and a second connection (A21, A22), wherein
- the converter (100) comprises a first, second, third and fourth switch (S1-S4) and a control facility (110) for controlling the four switches (S1-S4),
- the first and second switch (S1-S2) form a first series connection (R1) with two outer connections, of which one is connected to the first connection (A21) of the second connection side (102) and the other is connected to the second connection (A22) of the second connection side (102), wherein a central connection (M1) of the first series connection (R1) is connected to the first connection (A11) of the first connection side (101),
- the third and fourth switch (S3-S4) form a second series connection (R2) with two outer connections, of which one is connected to the first connection (A21) of the second connection side (102) and the other is connected to the second connection (A22) of the second connection side (102), wherein a central connection (M2) of the second series connection (R2) is connected to the second connection (A12) of the first connection side (101),
- wherein the converter (100) is a four quadrant chopper, **characterised in that**
- the first and second switch (S1-S2) each differ from the third and fourth switch (S3-S4) and indeed to that effect that the switching losses of the first and second switch (S1-S2) are each smaller than the switching losses of the third and fourth switch (S3-S4),
- the control facility (110) is designed so that it always switches the first and second switch (S1-S2) with a higher switchover frequency in each case than the third and fourth switch (S3-S4), and
- the first and second connection (A11, A12) of the first connection side (101) form alternating voltage connections of the converter (100) and the first and second connection (A21, A22) of the second connection side (102) form direct voltage connections of the converter (100).

2. Vehicle according to claim 1,
**characterised in that**
- the control facility (110) is designed so that it moves the first and second switch (S1-S2) into complementary switching states with a first switchover frequency and moves the third and fourth switch (S3-S4) into complementary switching states with a second switchover frequency,
- wherein the first switchover frequency is higher than the second switchover frequency.

3. Vehicle according to one of the preceding claims, **characterised in that**
the control facility (110) is designed so that it moves the third and fourth switch (S3-S4) into complementary switching states, namely with a switchover frequency, which corresponds to the alternating voltage frequency between the first and second connection (A11, A12) of the first connection side (101) or a whole number multiple thereof.

4. Vehicle according to one of the preceding claims, **characterised in that**
- the control facility (110) is designed so that it moves the first and second switch (S1-S2) into complementary switching states, namely with a switchover frequency which corresponds to any whole number or non-whole number multiple of the alternating voltage frequency between the first and second connection (A11, A12) of the first connection side (101),
- wherein the switchover frequency, at which the first and second switch (S1-S2) are switched, amounts to between 6 and 360 times the switchover frequency, with which the third and fourth switch (S3-S4) are switched in a complementary manner to one another.

5. Vehicle according to one of the preceding claims, **characterised in that**
the control facility (110) is designed such that it adjusts a power flow between the first and second connection side (101, 102) by means of a pulse width control of the first and second switch (S1-S2).

6. Vehicle according to one of the preceding claims, **characterised in that**
the control facility (110) is designed such that it adjusts a power flow between the first and second connection side (101, 102) by means of a pulse width control of the first and second switch (S1-S2) and switching the third and fourth switch (S3-S4) into complementary switching states, namely with a switchover frequency which corresponds to the alternating voltage frequency between the first and second connection (A11, A12) of the first connection side (101) or a whole number multiple thereof.

7. Vehicle according to one of the preceding claims, **characterised in that**
the control facility (110) is designed such that it adjusts a phase angle between current and voltage of the alternating voltage on the first connection side (101) between the first and second connection (A11, A12) by means of a pulse width control of the first and second switch (S1-S2) and switching of the third and fourth switch (S3-S4) into complementary switching states, namely with a switchover frequency which corresponds to the alternating voltage frequency between the first and second connection (A11, A12) of the first connection side (101) or a whole number multiple thereof.

8. Vehicle according to one of the preceding claims, **characterised in that**
the control facility (110) is designed such that it adjusts a predetermined target spectrum of current harmonics by means of a pulse width control of the first and second switch (S1-S2) and switching the third and fourth switch (S3-S4) into complementary switching states, namely with a switchover frequency which corresponds to the alternating voltage frequency between the first and second connection (A11, A12) of the first connection side (101) or a whole number multiple thereof.

9. Vehicle according to one of the preceding claims, **characterised in that**
- the third and fourth switch (S3-S4) belong to a switch group, which comprises as switches IGBTs, GTOs or thyristors, in each case with or without freewheeling diodes connected in antiparallel and/or
- the first and second switch (S1-S2) are MOSFETs, in particular SiC MOSFETs or comprise MOSFETs, in particular SiC MOSFETs in each case.

10. Vehicle according to one of the preceding claims, **characterised in that**
the first and second switch (S1-S2) are MOSFETs, in particular SiC MOSFETs, or comprise MOSFETs, in particular SiC MOSFETs in each case, to which a freewheeling diode (D) is connected in antiparallel.

11. Vehicle according to one of the preceding claims, **characterised in that**
the control facility (110) controls the four switches (S1-S4) in such a way that
- when an alternating voltage is applied between the first and second connection (A11, A12) of the first connection side (101), a direct voltage applies between the first and second connection (A21, A22) of the second connection side (102) and/or
- when a direct voltage is applied between the first and second connection (A21, A22) of the second connection side (102), an alternating voltage applies between the first and second connection (A11, A12) of the first connection side (101).

12. Vehicle according to one of the preceding claims, **characterised in that**
- a first chip area, which is formed by the sum of the chip area of the first switch (S1) and the chip area - if available - of one or more freewheeling diodes (D) connected in antiparallel with the first switch (S1), is as large as or at least approximately as large as a second chip area, which is formed by the sum of the chip area of the second switch (S2) and the chip area- if available - of one or more freewheeling diodes (D) connected in antiparallel with the second switch (S2),
- a third chip area, which is formed by the sum of the chip area of the third switch (S3) and the chip area - if available - of one or more freewheeling diodes (D) connected in antiparallel with the third switch (S3), is as large as or at least approximately as large as a fourth chip area, which is formed by the sum of the chip area of the fourth switch (S4) and the chip area - if available - of one or more freewheeling diodes (D) connected in antiparallel with the fourth switch (S4),
- the ratio between the first and third chip area and/or the second and fourth chip area lies in a region of 0.4 and 2.5.

13. Vehicle according to one of the preceding claims, **characterised in that**
the converter (100) is switched between a transformer (12) of the vehicle and a direct voltage intermediate circuit (13), which is connected to a drive (14) of the vehicle and/or an auxiliary converter (15) or can feed the same with energy.

14. Method for operating a vehicle, in particular rail vehicle (10), having a converter (100) with a first connection side (101) having a first and a second connection (A11, A12) and a second connection side (102) having a first and a second connection (A21, A22), wherein
- the converter (100) comprises a first, second, third and fourth switch (S1-S4) and a control facility (110) for controlling the four switches (S1-S4),
- the first and second switch (S1-S2) form a first series connection (R1) with two outer connections, of which one is connected to the first connection (A21) of the second connection side (102) and the other is connected to the second connection (A22) of the second connection side (102), wherein a central connection (M1) of the first series connection (R1) is connected to the first connection (A11) of the first connection side (101),
- the third and fourth switch (S3-S4) form a second series connection (R2) with two outer connections, of which one is connected to the first connection (A21) of the second connection side (102) and the other is connected to the second connection (A22) of the second connection side (102), wherein a central connection (M2) of the second series connection (R2) is connected to the second connection (A12) of the first connection side (101),
- the converter (100) is a four quadrant chopper, **characterised in that**
- the first and second switch (S1-S2) each differ from the third and fourth switch (S3-S4) and indeed to that effect that the switching losses of the first and second switch (S1-S2) are each smaller than the switching losses of the third and fourth switch (S3-S4),
- the first and second switch (S1-S2) are always switched in each case with a higher switchover frequency than the third and fourth switch (S3-S4), and
- the first and second connection (A11, A12) of the first connection side (101) form alternating voltage connections of the converter (100), and the first and second connection (A21, A22) of the second connection side (102) form direct voltage connections of the converter (100).

## Revendications

1. Véhicule, en particulier véhicule (10) ferroviaire, comprenant un convertisseur (100) ayant un premier côté (101) de connexion ayant une première et une deuxième bornes (A11, A12) et un deuxième côté (102) de connexion ayant une première et une deuxième borne (A21, A22), dans lequel
- le convertisseur (100) comprend un premier, un deuxième, un troisième et un quatrième interrupteurs (S1-S4) et un dispositif (110) de commande pour commander les quatre interrupteurs (S1-S4),
- le premier et le deuxième interrupteurs (S1-S2) forment un premier circuit (R1) série ayant deux bornes extérieures, dont l'une est en liaison avec la première borne (A21) du deuxième côté (102) de connexion et l'autre avec la deuxième borne (A22) du deuxième côté (102) de connexion, dans lequel une borne (M1) médiane du premier circuit (R1) série est en liaison avec la première borne (A11) du premier côté (101) de connexion,
- le troisième et quatrième interrupteurs (S3-S4) forment un deuxième circuit (R2) série ayant deux bornes extérieures, dont l'une est en liaison avec la première borne (A21) du deuxième côté (102) de connexion et l'autre avec la deuxième borne (A22) du deuxième côté (102) de connexion, dans lequel une borne (M2) médiane du deuxième circuit (R2) série est en liaison avec la deuxième borne (A12) du premier côté (101) de connexion,
- dans lequel le convertisseur (100) est un régulateur à quatre cadrans,
**caractérisé en ce que**
- le premier et le deuxième interrupteurs (S1-S2) se distinguent du troisième et du quatrième interrupteurs (S3-S4), et cela **en ce que** les pertes de commutation du premier et du deuxième interrupteurs (S1-S2) sont respectivement plus petites que les pertes de commutation du troisième et du quatrième interrupteurs (S3-S4),
- le dispositif (110) de commande est conformé de manière à commuter le premier et le deuxième interrupteurs (S1-S2) constamment respectivement à une fréquence de commutation plus grande que les troisième et quatrième interrupteurs (S3-S4), et
- la première et la deuxième bornes (A11-A12) du premier côté (101) de connexion forment des bornes de tension alternatives du convertisseur (100) et la première et la deuxième bornes (A21, A22) du deuxième côté (102) de connexion forment des bornes de tension continue du convertisseur (100).

2. Véhicule suivant la revendication 1,
**caractérisé en ce que**
- le dispositif (110) de commande est conformé de manière à mettre, avec une première fréquence de commutation, le premier et le deuxième interrupteurs (S1-S2) dans des états de commutation complémentaires et à mettre, avec une deuxième fréquence de commutation, dans des états de commutation complémentaires, le troisième et le quatrième interrupteurs (S3-S4),
- dans lequel la première fréquence de commutation est plus haute que la deuxième fréquence de commutation.

3. Véhicule suivant l'une des revendications précédentes, **caractérisé en ce que**
le dispositif (110) de commande est conformé de manière à mettre, le troisième et le quatrième interrupteurs (S3-S4) dans des états de commutation complémentaires, et cela à une fréquence de commutation, qui correspond à la fréquence de la tension alternative entre la première et la deuxième bornes (A11-A12) du premier côté (101) de connexion ou à l'un de ses multiples en nombre entier.

4. Véhicule suivant l'une des revendications précédentes, **caractérisé en ce que**
- le dispositif (110) de commande est conformé de manière à mettre le premier et le deuxième interrupteurs (S1-S2) dans des états de commutation complémentaires, et cela à une fréquence de commutation, qui correspond à un multiple quelconque - en nombre entier ou non en nombre entier - de la fréquence de la tension alternative entre la première et la deuxième bornes (A11-A12) du premier côté (101) de connexion,
- dans lequel la fréquence de commutation, à laquelle le premier et le deuxième interrupteurs (S1-S2) sont commutés, est comprise entre 6 et 360 fois la fréquence de commutation, à laquelle le troisième et le quatrième interrupteurs (S3-S4) sont commutés de manière complémentaire l'un par rapport à l'autre.

5. Véhicule suivant l'une des revendications précédentes, **caractérisé en ce que**
le dispositif (110) de commande est conformé de manière à, par une commande de largeur d'impulsion du premier et du deuxième interrupteurs (S1-S2), régler un flux de puissance entre le premier et le deuxième côtés (101, 102) de connexion.

6. Véhicule suivant l'une des revendications précédentes, **caractérisé en ce que**
le dispositif (110) de commande est conformé de manière à régler un flux de puissance entre le premier et le deuxième côtés (101, 102) de connexion par une commande de largeur d'impulsion du premier et du deuxième interrupteurs (S1-S2) et par une commutation des troisième et quatrième interrupteurs (S3-S4) dans des états de commutation complémentaires, et cela à une fréquence de commutation, qui correspond à la fréquence de la tension alternative entre la première et la deuxième bornes (A11, A12) du premier côté (101) de connexion ou à un multiple en nombre entier de celle-ci.

7. Véhicule suivant l'une des revendications précédentes, **caractérisé en ce que**
le dispositif (110) de commande est conformé de manière à régler un angle de phase entre courant et tension de la tension alternative, du premier côté (101) de connexion, entre la première et la deuxième bornes (A11, A12), par une commande de largeur d'impulsion du premier et du deuxième interrupteurs (S1-S2) et par une commutation du troisième et du quatrième interrupteurs (S3-S4) dans des états de commutation complémentaires, et cela à une fréquence de commutation, qui correspond à la fréquence de la tension alternative entre la première et la deuxième bornes (A11, A12) du premier côté (101) de connexion ou à un multiple de celle-ci en nombre entier.

8. Véhicule suivant l'une des revendications précédentes, **caractérisé en ce que**
le dispositif (110) de commande est conformé de manière à régler un spectre de consigne donné à l'avance d'harmonique de courant par une commande de largeur d'impulsion du premier et du deuxième interrupteurs (S1-S2) et par une commutation du troisième et du quatrième interrupteur (S3-S4) dans des états de commutation complémentaires, et cela à une fréquence de commutation, qui correspond à la fréquence de la tension alternative entre la première et la deuxième bornes (A11, A12) du premier côté (101) de connexion ou à un multiple de celle-ci en nombre entier.

9. Véhicule suivant l'une des revendications précédentes, **caractérisé en ce que**
- le troisième et le quatrième interrupteurs (S3-S4) appartiennent à un groupe d'interrupteurs, qui comprend, comme interrupteurs, des IGBT, des GTO ou des thyristors, avec ou sans respectivement des diodes en roue libre montées tête bêche, et/ou
- le premier et le deuxième interrupteurs (S1-S2) sont respectivement des MOSFET, en particulier des SiC-MOSFET ou comprennent des MOSFET, en particulier des SiC-MOSFET.

10. Véhicule suivant l'une des revendications précédentes, **caractérisé en ce que**
le premier et le deuxième interrupteurs (S1-S2) sont respectivement des MOSFET, en particulier des SiC-MOSFET ou comprennent des MOSFET, en particulier des SiC-MOSFET, avec lesquels est monté tête bêche respectivement une diode (D) de roue libre.

11. Véhicule suivant l'une des revendications précédentes, **caractérisé en ce que**
le dispositif (110) de commande commande les quatre interrupteurs (S1-S4), de manière à ce qu'
- à l'application d'une tension alternative entre la première et la deuxième bornes (A11, A12) du premier côté (101) de connexion, une tension continue s'applique entre la première et la deuxième bornes (A21, A22) du deuxième côté (102) de connexion, et/ou
- à l'application d'une tension continue entre la première et la deuxième bornes (A21, A22) du deuxième côté (102) de connexion, une tension alternative s'applique entre la première et la deuxième bornes (A11, A12) du premier côté (101) de connexion.

12. Véhicule suivant l'une des revendications précédentes, **caractérisé en ce que**
- une première surface de puce, qui est formée de la somme de la surface de puce du premier interrupteur (S1) et de la surface de puce - ainsi présente - d'une ou de plusieurs diodes (D) de roue libre montées tête bêche par rapport au premier interrupteur (S1), est aussi grande ou du moins à peu près aussi grande qu'une deuxième surface de puce, qui est formée par la somme de la surface de puce du deuxième interrupteur (S2) et de la surface de puce - ainsi présente - d'une ou de plusieurs diodes (D) de roue libre montées tête bêche par rapport au deuxième interrupteur (S2),
- une troisième surface de puce, qui est formée de la somme de la surface de puce du troisième interrupteur (S3) et de la surface de puce - ainsi présente - d'une ou de plusieurs diodes (D) de roue libre montées tête bêche par rapport au troisième interrupteur (S3), est aussi grande ou du moins à peu près aussi grande qu'une quatrième surface de puce, qui est formée de la somme de la surface de puce du quatrième interrupteur (S4) et de la surface de puce - ainsi présente - d'une ou de plusieurs diodes (D) de roue libre montées tête bêche par rapport au quatrième interrupteur (S4),
- le rapport entre la première et la troisième surfaces de puce et/ou entre la deuxième et la quatrième surfaces de puce est dans une plage de 0,4 à 2,5.

13. Véhicule suivant l'une des revendications précédentes, **caractérisé en ce que**
le convertisseur (100) est monté entre un transformateur (12) du véhicule et un circuit (13) intermédiaire à tension continue, qui est en liaison avec un entraînement (14) du véhicule et/ou un convertisseur (15) de fonctionnement auxiliaire et peut alimenter celui-ci ou ceux-ci en énergie.

14. Procédé pour faire fonctionner un véhicule, en particulier un véhicule (10) ferroviaire, comprenant un convertisseur (100) ayant un premier côté (101) de connexion ayant une première et une deuxième bornes (A11, A12) et un deuxième côté (102) de connexion ayant une première et une deuxième borne (A21, A22), dans lequel
- le convertisseur (100) comprend un premier, un deuxième, un troisième et un quatrième interrupteurs (S1-S4) et un dispositif (110) de commande pour commander les quatre interrupteurs (S1-S4),
- le premier et le deuxième interrupteurs (S1-S2) forment un premier circuit (R1) série ayant deux bornes extérieures, dont l'une est en liaison avec la première borne (A21) du deuxième côté (102) de connexion et l'autre avec la deuxième borne (A22) du deuxième côté (102) de connexion, dans lequel une borne (M1) médiane du premier circuit (R1) série est en liaison avec la première borne (A11) du premier côté (101) de connexion,
- le troisième et quatrième interrupteurs (S3-S4) forment un deuxième circuit (R2) série ayant deux bornes extérieures, dont l'une est en liaison avec la première borne (A21) du deuxième côté (102) de connexion et l'autre avec la deuxième borne (A22) du deuxième côté (102) de connexion, dans lequel une borne (M2) médiane du deuxième circuit (R2) série est en liaison avec la deuxième borne (A12) du premier côté (101) de connexion,
- dans lequel le convertisseur (100) est un régulateur à quatre cadrans,
**caractérisé en ce que**
- le premier et le deuxième interrupteurs (S1-S2) se distinguent du troisième et du quatrième interrupteurs (S3-S4), et cela **en ce que** les pertes de commutation du premier et du deuxième interrupteurs (S1-S2) sont respectivement plus petites que les pertes de commutation du troisième et du quatrième interrupteurs (S3-S4),
- le dispositif de commande est conformé de manière à commuter le premier et le deuxième interrupteurs (S1-S2) constamment respectivement à une fréquence de commutation plus grande que les troisième et quatrième interrupteurs (S3-S4), et
- la première et la deuxième bornes (A11-A12) du premier côté (101) de connexion forment des bornes de tension alternatives du convertisseur (100) et la première et la deuxième bornes (A21, A22) du deuxième côté (102) de connexion forment des bornes de tension continue du convertisseur (100).
